# EUROPÄISCHE PATENTSCHRIFT

(11) **EP 1 353 075 B1**
(45) Veröffentlichungstag und Bekanntmachung des Hinweises auf die Patenterteilung: **18.04.2007**
(21) Anmeldenummer: 03007743.2
(22) Anmeldetag: 04.04.2003
(51) Int. Cl.: F15B 1/26, F15B 20/00, F01M 5/02, F01L 1/34, F16H 61/00, F16H 57/04

(54) **Ansteuereinrichtung für mindestens einen Verbraucher, wie Nockenwellenversteller, automatisches Getriebe und dergleichen, von Fahrzeugen, vorzugsweise Kraftfahrzeugen**
Starting device for a consumer, such as a camshaft adjuster, automatic gearbox and suchlike, of a vehicle, especially a motor vehicle
Dispositif de démarrage d'un utilisateur, comme déphaseur d'un arbre à cames, boîte de vitesses automatique et similaire, d'un véhicule, surtout d'un véhicule à moteur

(30) Priorität: 13.04.2002 DE 10216352
(43) Veröffentlichungstag der Anmeldung: 15.10.2003
(73) Patentinhaber: HYDRAULIK-RING GMBH, 97828 Marktheidenfeld (DE)
(72) Erfinder: Sluka, Gerold, 72622 Nürtingen (DE); Knecht, Andreas, 72127 Kusterdingen (DE); Jubelt, Michael, 73760 Ostfildern (DE); Meyer, Roland, 72622 Nürtingen (DE); Polzin, Ulf, 70771 Leinfelden (DE)
(74) Vertreter: Cremer, Ulrike Theresia

(56) Entgegenhaltungen:
- EP-A- 0 931 912
- DE-A- 3 929 078
- DE-A- 10 028 074
- FR-A- 874 863
- US-A- 5 589 059
- US-A- 6 148 789

## Beschreibung

Die Erfindung betrifft eine Ansteuereinrichtung für mindestens einen Nockenwellenversteller von Kraftfahrzeugen, nach dem Oberbegriff des Anspruches 1.

Bei Verbrennungskraftmaschinen von Kraftfahrzeugen ist es bekannt, mit Starten des Motors die Ölpumpe in Betrieb zu nehmen. Sie ist mit der Kurbelwelle verbunden und fördert das Öl in Abhängigkeit von der Drehzahl der Kurbelwelle. Mit dem Öl wird beispielsweise ein Nockenwellenversteller bzw. dessen Nockenwelle geschmiert. Wenn der Motor gestartet wird, ist die Ölzufuhr zum Nockenversteller noch ungenügend. Probleme treten ferner auf, wenn der Motor warm gelaufen ist und auf Leerlauf geschaltet wird. Dann geht die Drehzahl der Kurbelwelle und damit auch die Drehzahl der Ölpumpe zurück, so dass die Förderleistung für eine ausreichende Versorgung des Nockenwellenverstellers ungenügend sein kann. Die EP 0 931 912 beschreibt eine bestimmte Ausgestaltung eines variablen Ventiltriebs für Verbrennungskraftmaschinen mit Gaswechselventilen. Um die sichere Funktion während der Startphase des Motors mit variablem Ventiltrieb zu gewährleisten, ist ein Hilfsdruckspeicher mit einem federvorgespannten Kolben eingangsseitig vor dem Hydraulikbereich des variablen Ventiltriebs vorgesehen, der durch die Federwirkung ein sofortiges Befüllen der Druckkammer des variablen Ventiltriebs sicherstellt. Während bei variablen Ventiltrieben auf hydraulischer Basis des vorgestellten Typs die Befüllung überhaupt notwendig ist, um die Funktionsweise des Motors zu gewährleisten, können Motoren mit mechanisch festen Nockenwellen mit Nockenwellenverstellern auch bei verdrehten Verstellern funktionieren, die Abgaswerte sind aber in unkontrollierten Zuständen häufig schlechter.

Der Erfindung liegt die Aufgabe zugrunde, die gattungsgemäße Ansteuereinrichtung so auszubilden, dass, sowohl beim Start des Motors als auch bei Leerlauf des warmen Motors, eine optimale Versorgung des Nockenwellenverstellers mit Medium gewährleistet ist.

Diese Aufgabe wird bei der gattungsgemäßen Ansteuereinrichtung erfindungsgemäß mit den kennzeichnenden Merkmalen des Anspruches 1 gelöst.

Bei der erfindungsgemäßen Ansteuereinrichtung wird der Nockenwellenversteller bereits dann ausreichend mit Medium, vorzugsweise mit Öl, versorgt, wenn der Motor noch nicht gestartet ist. Zu diesem Zeitpunkt wird bereits Öl dem Nockenwellenversteller zugeführt, so dass zu Beginn des Startvorganges des Motors der Nockenwellenversteller ausreichend mit Medium versorgt wird. Es kann mit der erfindungsgemäßen Ansteuereinrichtung erreicht werden, dass die Nockenwelle in ihre exakte Ausgangslage durch die Zufuhr des Mediums gebracht wird, wenn sie beim Abschalten des Motors noch nicht ihre optimale Ausgangsstellung erreicht haben sollte.

Weitere Merkmale der Erfindung ergeben sich aus den weiteren Ansprüchen, der Beschreibung und den Zeichnungen.

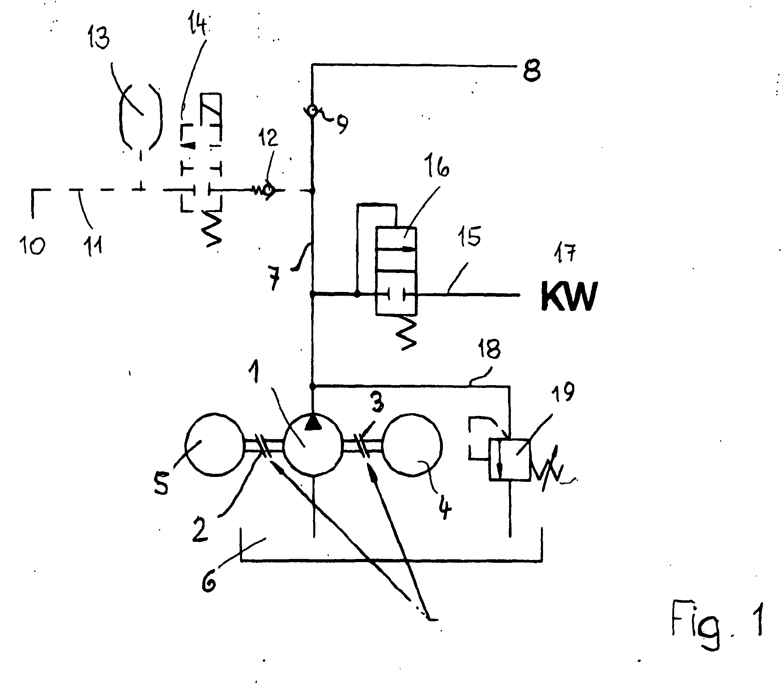

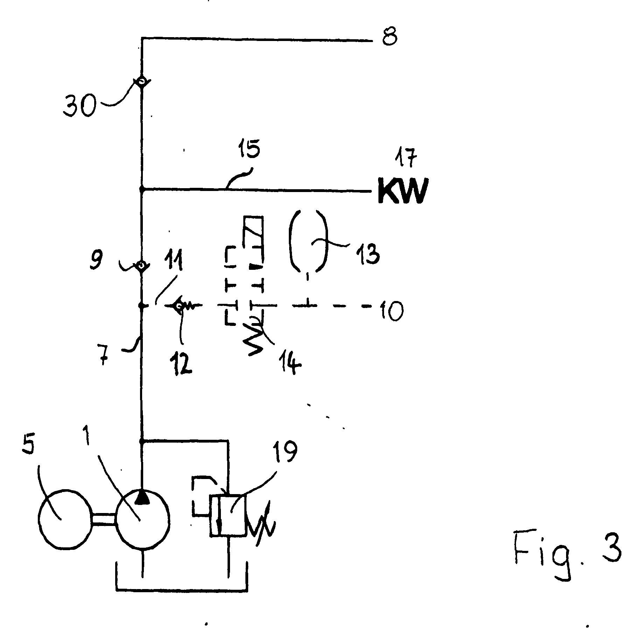

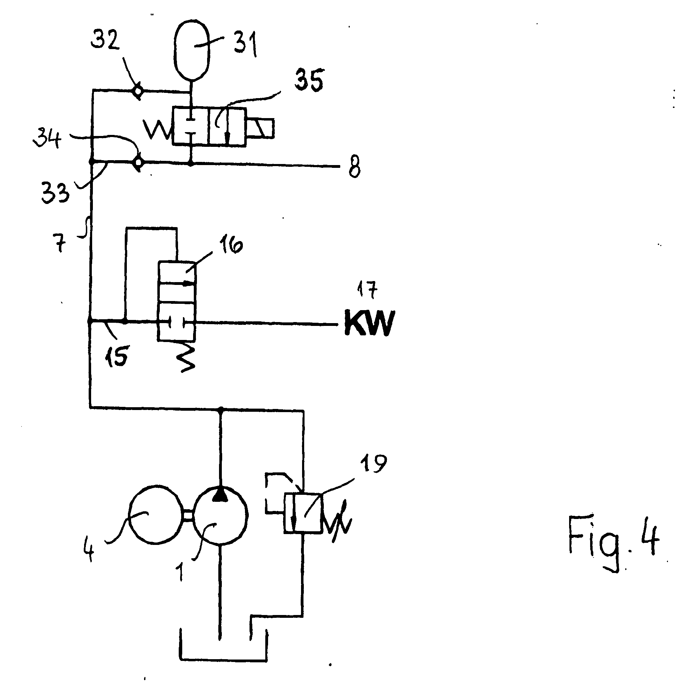

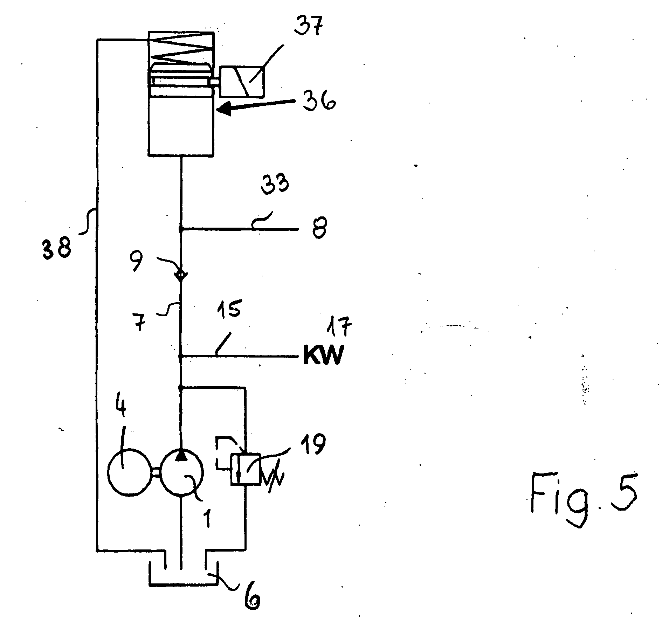

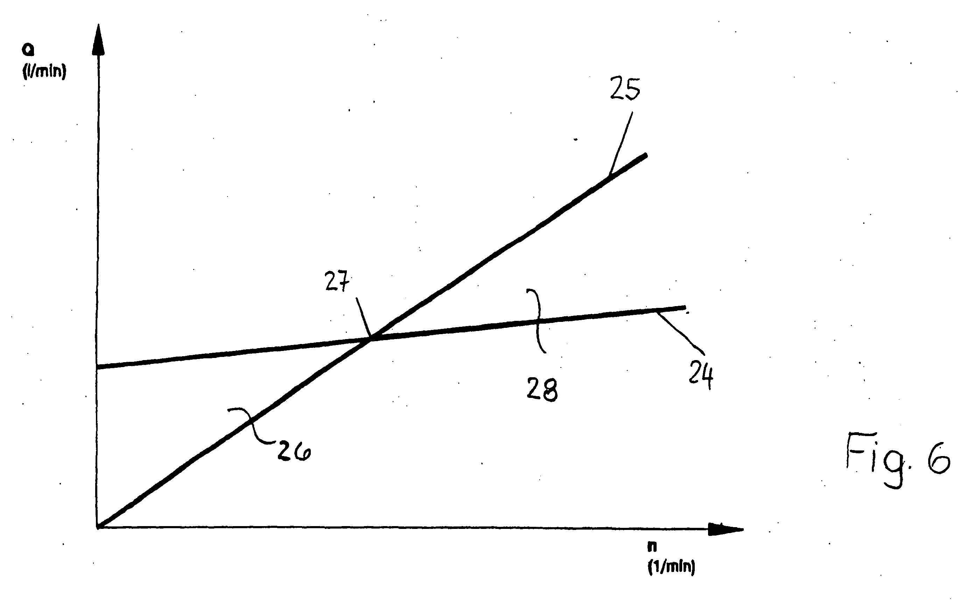

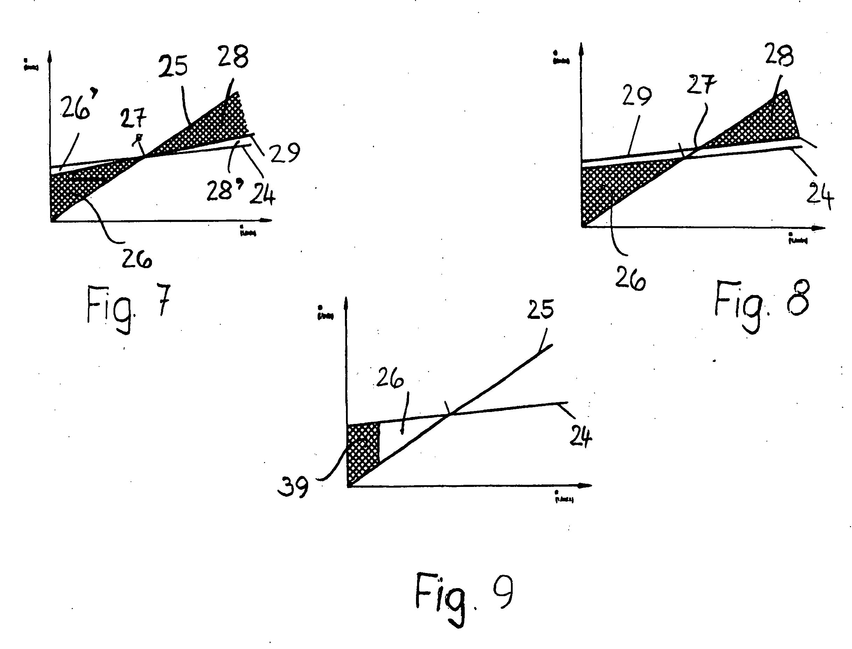

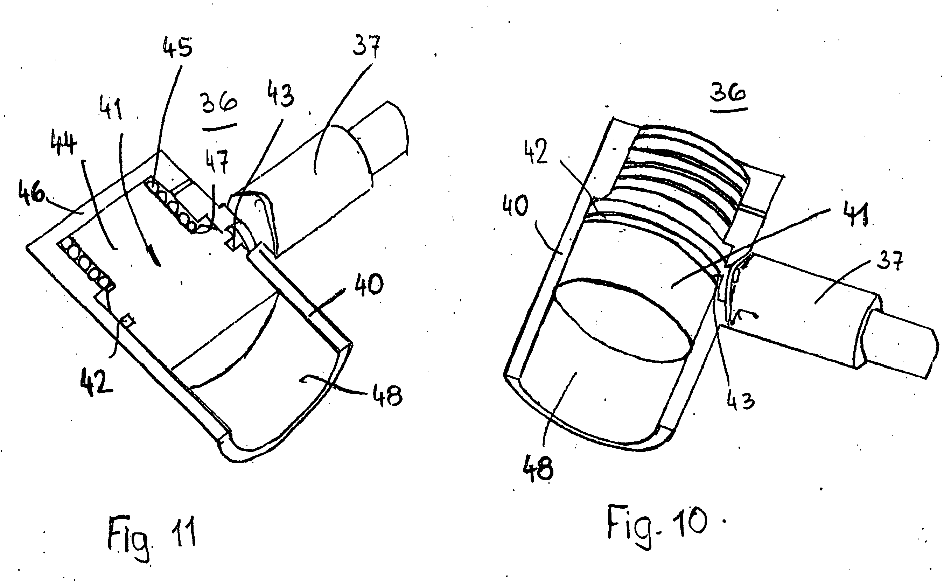

Die Erfindung wird nachstehend anhand einiger in den Zeichnungen dargestellter Ausführungsformen näher erläutert. Es zeigen Fig. 1 bis Fig. 5 verschiedene Ausführungsformen von Ansteuereinrichtungen, wobei die Fig. 3 und 5 Referenzbeispiele sind, Fig. 6 ein Fördervolumen-Drehzahl-Diagramm für die Ölversorgung von herkömmlichen Motoren, Fig. 7 das Fördervolumen-Drehzahl-Diagramm für die erfindungsgemäße Ansteuereinrichtung gemäß den Fig. 1 und 2, Fig. 8 ein Fördervolumen-Drehzahl-Diagramm für die Ansteuereinrichtung gemäß Fig. 3, Fig. 9 ein Fördervolumen-Drehzahl-Diagramm für die Ansteuereinrichtung gemäß den Fig. 4 und 5, Fig. 10 einen elektromagnetisch entsperrbaren Kolbenspeicher der Ansteuereinrichtung gemäß Fig. 5, teilweise im Schnitt, Fig. 11 den Kolbenspeicher gemäß Fig. 10 im Axialschnitt.

Mit den im folgenden beschriebenen Ansteuereinrichtungen wird erreicht, dass beim Starten und beim Heißleerlauf eines Motors eine optimale Ölversorgung des Nockenwellenverstellers gewährleistet ist.

Die Ansteuereinrichtung gemäß Fig. 1 hat eine Ölpumpe 1, die über jeweils eine Kupplung 2, 3 mit einem Fahrzeugmotor 4 und einem Elektromotor 5 verbunden ist. Das von der Ölpumpe 1 aus einem Tank 6 geförderte Öl wird über eine Druckleitung 7 zu einem Nockenwellenversteller 8 gefördert, der in bekannter Weise ausgebildet ist und darum auch nicht näher beschrieben wird. In der Druckleitung 7 sitzt ein in Richtung auf den Nockenwellenversteller 8 öffnendes Rückschlagventil 9. Das über die Druckleitung 7 geförderte Öl dient auch zur Ölversorgung der Nockenwelle, insbesondere zur Lagerschmierung.

An die Druckleitung 7 können gegebenenfalls weitere Verbraucher 10 angeschlossen sein, zum Beispiel automatisierte Getriebe, Bremskraftverstärker und dergleichen. Dieser Verbraucher 10 ist über eine Leitung 11 an die Druckleitung 7 angeschlossen. In der Leitung 11 sitzt ein gegen die Druckleitung 7 schließendes Rückschlagventil 12. An die Leitung 11 sind ein Ölspeicher 13 und ein Zuschaltventil 14 angeschlossen, mit dem der Zufluss des von der Ölpumpe 1 geförderten Öls zum weiteren Verbraucher 10 geschaltet werden kann.

Im Ausführungsbeispiel ist im Bereich zwischen der Ölpumpe 1 und der Leitung 11 an die Druckleitung 7 eine weitere Leitung 15 angeschlossen, in der ein Druckzuschaltventil 16 sitzt, mit dem der Zugang des von der Ölpumpe 1 gelieferten Öls zur Kurbelwelle 17 gesteuert wird. Das Druckzuschaltventil 16 ist so ausgebildet, dass das in der Druckleitung 7 strömende Öl erst ab einem bestimmten Druck zur Kurbelwelle 17 gelangt. Das Rückschlagventil 9 ist so ausgebildet, dass zunächst das unter Druck stehende Öl über dieses Rückschlagventil 9 zum Nockenwellenversteller 8 und die Nockenwelle gelangt, so dass diese Bauteile als erstes mit dem notwendigen Öl versorgt werden. Sobald der Druck in der Druckleitung 7 einen höheren Wert erreicht hat, wird das Druckzuschaltventil 16 geöffnet, so dass das Öl über die Leitung 15 zur Kurbelwelle 17 gelangen kann.

Wird im Fahrzeug die Zündung eingeschaltet, ohne dass der Anlasser betätigt wird, wird der Elektromotor 5 eingeschaltet, der über die Kupplung 2 die Ölpumpe 1 antreibt. Die Kupplung 3 zwischen der Ölpumpe 1 und dem Fahrzeugmotor 4 ist in diesem Stadium geöffnet, so dass zwischen der Ölpumpe 1 und dem Fahrzeugmotor 4 ein Freilauf besteht. Somit wird bereits in der Zündstellung das notwendige Öl in der beschriebenen Weise über die Druckleitung 7 zum Nockenwellenversteller 8 und zur Nockenwelle gefördert. Wird der Zündschlüssel weiter bis in Anlasserstellung gedreht, wird auch der Fahrzeugmotor 4 angetrieben. Sobald der Fahrzeugmotor 4 eine höhere Drehzahl als der Elektromotor 5 hat, wird die Kupplung 3 geschlossen, so dass die Ölpumpe 1 in bekannter Weise vom Fahrzeugmotor 4 angetrieben wird. Gleichzeitig wird die Kupplung 2 zwischen der Ölpumpe 1 und dem Elektromotor 5 geöffnet bzw. auf Freilauf geschaltet. Nunmehr erfolgt die Ölversorgung der Nockenwelle und des Nockenwellenverstellers 8 in herkömmlicher Weise.

Reicht die Ölversorgung der Nockenwelle und des Nockenwellenverstellers 8 nicht aus, wird die Kupplung 2 geschlossen und damit der Elektromotor 5 zugeschaltet, so dass die Ölpumpe 1 wieder auf die notwendige Drehzahl gebracht wird. Mit ihr kann dann das Öl in ausreichendem Maße zur Nockenwelle und zum Nockenwellenversteller 8 gefördert werden. Mit dem Zuschalten des Elektromotors 5 wird die Kupplung 3 zwischen der Ölpumpe 1 und dem Fahrzeugmotor 4 geöffnet bzw. auf Freilauf geschaltet.

Im Bereich zwischen der Leitung 15 und der Ölpumpe 1 mündet in die Druckleitung 7 eine Tankleitung 18, in der ein Druckbegrenzungsventil 19 sitzt. Sobald der Druck in der Druckleitung 7 einen vorgegebenen Wert überschreitet, öffnet das Druckbegrenzungsventil 19, so dass das Öl zum Tank 6 zurückströmen kann.

Mit der beschriebenen Ansteuereinrichtung werden die Nockenwelle und der Nockenwellenversteller 8 bereits dann mit Öl versorgt, wenn der Fahrzeugmotor noch nicht eingeschaltet ist. Für die Versorgung des Nockenwellenverstellers 8 sowie eventueller weiterer Verbraucher 10 ist nur eine einzige Ölpumpe 1 vorgesehen. Der Elektromotor 5 wird als Hilfsversorgung zugeschaltet, wenn das Öl nicht in ausreichendem Maße in der Druckleitung 7 gefördert wird.

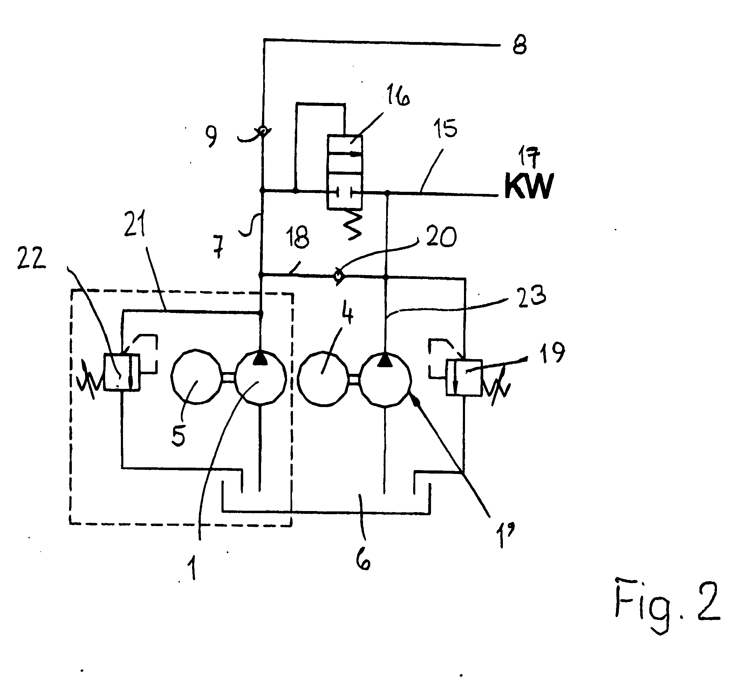

Die Ansteuereinrichtung gemäß Fig. 2 hat zwei Ölpumpen 1, 1'. Die Ölpumpe 1' wird in herkömmlicher Weise vom Fahrzeugmotor 4 angetrieben und kann klein dimensioniert werden. Die Ölpumpe 1 wird durch den Elektromotor 5 angetrieben. In der Zündstellung des Zündschlüssels wird der Elektromotor 5, wie anhand der Ausführungsform nach Fig. 1 erläutert worden ist, eingeschaltet, so dass das Öl von der Ölpumpe 1 über die Druckleitung 7 und das Rückschlagventil 9 zum Nockenwellenversteller 8 bzw. zur Nockenwelle mit ausreichendem Druck gefördert wird. Wird der Zündschlüssel weiter in Anlassstellung gedreht, wird die Ölpumpe 1' vom Fahrzeugmotor 4 in bekannter Weise angetrieben. Der Elektromotor 5 wird dann abgeschaltet, so dass das Öl ausschließlich über die Ölpumpe 1 und die Leitung 18 in die Druckleitung 7 gefördert wird. In der Leitung 18 sitzt ein gegen die Druckleitung 7 öffnendes Rückschlagventil 20, das verhindert, dass das von der Ölpumpe 1 gelieferte Öl zur Ölpumpe 1' gelangen kann. Im Bereich zwischen der Ölpumpe 1 und dem Rückschlagventil 9 ist die Leitung 15 angeschlossen, in der das Druckzuschaltventil 16 sitzt und die zur Kurbelwelle 17 führt.

Im elektromotorseitigen Teil der Ansteuereinrichtung ist im Bereich zwischen der Leitung 18 und der Ölpumpe 1 eine Leitung 21 an die Druckleitung 7 angeschlossen. In der Leitung 21 sitzt ein Druckbegrenzungsventil 22, das den Druck in der Druckleitung 7 auf einen vorgegebenen Wert begrenzt. Wird er überschritten, öffnet das Druckbegrenzungsventil 22 zum Tank 6.

Die Ölpumpe 1' ist über eine Druckleitung 23 an die Leitung 18 sowie an die Leitung 15 angeschlossen. Das Druckbegrenzungsventil 19 in der Leitung 18 sorgt dafür, dass der Druck in der Druckleitung 23 nicht zu hoch ist. Die Druckleitung 23 ist im Bereich zwischen dem Druckzuschaltventil 16 und der Kurbelwelle 17 an die Leitung 15 angeschlossen.

Da die Ölversorgung des Nockenwellenverstellers 8 sowie der Nockenwelle in der Zündstellung durch den Elektromotor 5 erfolgt, kann die Ölpumpe 1' klein dimensioniert sein. Die Ölpumpe 1' ist ständig in Betrieb, solange der Fahrzeugmotor 4 läuft. Die Ölpumpe 1' wird dann in bekannter Weise drehzahlabhängig angetrieben.

Auch bei dieser Ausführungsform werden der Nockenwellenversteller 8 und die Nockenwelle mit Öl versorgt, wenn der Fahrzeugmotor 4 noch nicht eingeschaltet ist. Die Ölpumpe 1 kann als Hilfsversorgung dann zugeschaltet werden, wenn die Versorgung des Nockenwellenverstellers und der Nockenwelle durch die Ölpumpe 1' nicht ausreichen sollte. Da die Ölpumpe 1' ständig in Betrieb ist, wird die Nockenwellenlagerung drehzahlabhängig geschmiert, wodurch sich ein optimales Verschleißverhalten ergibt.

Entsprechend der vorigen Ausführungsform können an die Druckleitung 7 weitere Verbraucher angeschlossen sein. Fig. 6 zeigt die Ölversorgung bei einem herkömmlichen Motor. In Fig. 6 ist das Fördervolumen an Öl gegen die Drehzahl des Motors aufgetragen. Die Linie 24 zeigt den Ölbedarf des Motors an. Mit zunehmender Drehzahl des Motors nimmt der Ölbedarf zu. Die Linie 25 in Fig. 6 zeigt das Fördervolumen der Motorölpumpe. Ist der Motor abgeschaltet und dementsprechend die Drehzahl Null, dann beträgt das Ölfördervolumen ebenfalls Null. Wird der Motor eingeschaltet, steigt das Fördervolumen mit der Drehzahl annähernd linear an. Die Kurve 25 steigt wesentlich stärker als die Kurve 24 an. Der Ölbedarf des Motors (Kurve 24) hat bei ausgeschaltetem Motor einen bestimmten Wert. Läuft der Fahrzeugmotor im Leerlauf, ist die Ölversorgung des Motors nicht ausreichend. Die Kurve 24 im Diagramm gemäß Fig. 6 verläuft in diesem Bereich oberhalb der Fördervolumen-Kurve 25. Der Bereich 26 zwischen diesen beiden Kurvenabschnitten kennzeichnet den Unterversorgungsbereich. Da bei Leerlaufdrehzahl die Ölversorgung des Motors nicht ausreichend ist, müssen die Lager des Fahrzeugmotors sowie des Nockenwellenverstellers überdimensioniert werden.

Mit zunehmender Drehzahl schneidet die Fördervolumen-Kurve 25 im Punkt 27 die Ölbedarf-Kurve 24. In diesem Schnittpunkt 27 ist die Ölversorgung des Motors ausreichend. Da aber die Fördervolumen-Kurve 25 mit steigender Motordrehzahl stärker zunimmt als die Ölbedarf-Kurve 24, ist bei höheren Drehzahlen im Bereich 28 oberhalb des Schnittpunktes 27 eine Ölüberversorgung gegeben. Sie stellt eine Verlustleistung dar, da eine solche Ölüberversorgung für eine ausreichende Ölversorgung des Motors nicht notwendig wäre.

Die Ansteuereinrichtungen nach den Fig. 1 und 2 haben ein Fördervolumen-Drehzahl-Diagramm, wie es in Fig. 7 dargestellt ist. In Fig. 7 sind die bei herkömmlichen Motoren vorgesehenen Unterversorgungs- und Überbedarfs-Bereiche 26, 28 durch Schraffur gekennzeichnet. Da bei den Ansteuereinrichtungen nach den Fig. 1 und 2 die Ölpumpe 1, 1' bereits dann eingeschaltet sind, wenn der Fahrzeugmotor 4 noch nicht läuft, verläuft die Fördervolumen-Kurve 29 wesentlich flacher als bei herkömmlichen Motoren (Fig. 6). Insbesondere verläuft die Fördervolumen-Kurve 29 nicht durch den Nullpunkt des Fördervolumen-Drehzahl-Diagramms. Wie sich aus Fig. 7 ergibt, verläuft die Fördervolumen-Kurve 29 wesentlich flacher als die Fördervolumen-Kurve 25 bei den bekannten Motoren. Dementsprechend sind die Bereiche 26', 28' wesentlich kleiner als bei den bekannten Ausführungen. Die Ansteuereinrichtungen nach den Fig. 1 und 2 können so ausgebildet werden, dass die beiden Kurven 24, 29 zusammenfallen, so dass die Verlustleistung Null ist. Insbesondere wird im Drehzahlbereich unterhalb des Schnittpunktes 27 der beiden Kurven 24, 29 eine Ölunterversorgung zuverlässig vermieden. Dadurch können beispielsweise die Lager des Nockenwellenverstellers 8 und anderer, mit Öl zu versorgender Bauteile verkleinert werden. Insbesondere müssen sie nicht mehr überdimensioniert werden. Die Lebensdauer der Lager wird dadurch erheblich verlängert.

Die Ansteuereinrichtung gemäß Fig. 3 (Referenzbeispiel) hat entsprechend der Ausführungsform nach Fig. 1 nur eine einzige Ölpumpe 1, die durch den Elektromotor 5 angetrieben wird. Über die Druckleitung 7 wird der Nockenwellenversteller 8 sowie die Nockenwelle mit dem notwendigen Öl versorgt. Im Bereich zwischen der Ölpumpe 1 und dem Rückschlagventil 9 ist an die Druckleitung 7 ist Leitung 11 angeschlossen, über die wenigstens ein weiterer Verbraucher 10 angeschlossen wird. In der Leitung 11 sitzen das gegen die Druckleitung 7 schließende Rückschlagventil 12, der Ölspeicher 13 und das Zuschaltventil 14, das im Bereich zwischen dem Rückschlagventil 12 und dem Speicher 13 vorgesehen ist.

In Strömungsrichtung des Öls in der Druckleitung 7 befindet sich hinter dem Rückschlagventil 9 ein weiteres Rückschlagventil 30, das, ebenso wie das Rückschlagventil 9, gegen die Ölpumpe 1 schließt. Zwischen den beiden Rückschlagventilen 9, 30 schließt an die Druckleitung 7 die Leitung 15 an, über die die Kurbelwelle 17 mit Öl versorgt werden kann.

In Strömungsrichtung hinter dem Rückschlagventil 30 befinden sich der Nockenwellenversteller 8 und die Nockenwelle.

Der Druck in der Druckleitung 7 wird durch das Druckbegrenzungsventil 19 bestimmt.

Bei diesem Referenzbeispiel ist eine vom Fahrzeugmotor angetriebene Ölpumpe nicht vorgesehen. Der Elektromotor 5 ist hinsichtlich seiner Leistung so ausgelegt, dass die notwendige Ölversorgung für die einzelnen Komponenten sichergestellt ist. Der Elektromotor 5 wird entsprechend den vorhergehenden Ausführungsformen bereits in der Zündstellung des Zündschlüssels betätigt, so dass vor dem Starten des Fahrzeugmotors der Nockenwellenversteller 8, die Nockenwelle und die Kurbelwelle 17 sowie eventuelle weitere Verbraucher 10 mit dem notwendigen Öl versorgt werden. Wie bei der Ausführungsform nach Fig. 2 ergibt sich ein optimaler Wirkungsgrad sowie ein optimales Verschleißverhalten der Lagerung. Es können auch Werkstoffe mit geringer Festigkeit verwendet werden, da die zu schmierenden Bauteile schon vor dem Starten des Motors mit dem notwendigen Öl versorgt werden.

Das zum Referenzbeispiel gemäß Fig. 3 gehörende Fördervolumen-Drehzahl-Diagramm zeigt Fig. 8. Auf ihr sind die bei den herkömmlichen Motoren vorgesehenen Unterversorgungs- sowie Überversorgungs-Bereiche 26, 28 durch Schraffur gekennzeichnet. Die Fördervolumen-Kurve 29 des Referenzbeispiels nach Fig. 3 ist im Vergleich zu den Ansteuereinrichtungen nach den Fig. 1 und 2 zu höheren Fördervolumen-Werten verschoben. Die zwischen der Kurve 29 und der Ölbedarfskurve 24 für den Motor befindlichen Bereiche sind minimiert, so dass, wie bei den vorigen Ausführungsformen, eine Unterversorgung an Öl bei Drehzahlen unterhalb des Schnittpunktes 27 vermieden wird, während eine Überversorgung an Öl bei höheren Drehzahlen ebenfalls vermieden, allenfalls nur geringfügig vorhanden ist.

Die Ansteuereinrichtung gemäß Fig. 4 hat eine einzige Ölpumpe 1, die ausschließlich vom Fahrzeugmotor 4 betätigt wird. Zur Bereitstellung des Zusatzöls wird, im Unterschied zu den vorigen Ausführungsbeispielen, nicht ein Elektromotor, sondern ein Zusatzspeicher 31 eingesetzt. Er ist gegen die Druckleitung 7 durch ein Rückschlagventil 32 gesichert. Von der Druckleitung 7 zweigt die Leitung 15 ab, in der das Druckzuschaltventil 16 liegt und die zur Kurbelwelle 17 führt.

An die Druckleitung 7 schließt außerdem eine Leitung 33 an, in der ein gegen die Druckleitung 7 schließendes Rückschlagventil 34 liegt. Damit das im Zusatzspeicher 31 befindliche Öl eingesetzt werden kann, ist der Zusatzspeicher 31 an ein Ventil 35 angeschlossen.

Der Druck in der Druckleitung 7 wird durch das Druckbegrenzungsventil 19 begrenzt.

In der Zündstellung des Zündschlüssels wird das Ventil 35 geöffnet, so dass das Öl im Zusatzspeicher 31 zum Nockenwellenversteller 8 sowie zur Nockenwelle strömen kann. Sobald der Motor angelassen ist und sich in der Druckleitung 7 ein entsprechender Druck aufbaut, wird das Druckzuschaltventil 16 geöffnet, so dass das Öl über die Leitung 15 zur Kurbelwelle 17 strömen kann. Außerdem kann das Öl über die Leitung 33 und das Rückschlagventil 34 zum Nockenwellenversteller sowie zur Nockenwelle gelangen.

Die Ansteuervorrichtung gemäß Fig. 5 (Referenzbeispiel) entspricht im Wesentlichen dem Ausführungsbeispiel gemäß Fig. 4. Anstelle des Zusatzspeichers 31 ist die Ansteuereinrichtung mit einem Kolbenspeicher 36 versehen, der mit einem Elektromagneten 37 verriegelbar ist. Wird mit dem Zündschlüssel die Zündstellung eingeschaltet, wird der Elektromagnet 37 so erregt, dass er den Kolbenspeicher 36 freigibt. Er kann das in ihm befindliche Öl über die Leitung 33 zum Nockenwellenversteller 8 und zur Nockenwelle fördern. Der Kolbenspeicher 36 ist an die Druckleitung 7 angeschlossen, in der das gegen die Ölpumpe 1 schließende Rückschlagventil 9 liegt. Die Leitung 33 zweigt im Bereich zwischen dem Rückschlagventil 9 und dem Kolbenspeicher 36 ab. Im Bereich zwischen der Ölpumpe 1 und dem Rückschlagventil 9 ist an die Druckleitung 7 die zur Kurbelwelle 17 führende Leitung 15 angeschlossen. Entsprechend den vorhergehenden Ausführungsformen wird mit dem Druckbegrenzungsventil 19 der Druck des Öls in der Druckleitung 7 begrenzt.

An den Kolbenspeicher 36 ist eine Entlüftungsleitung 38 angeschlossen.

Nachdem durch Entriegeln des Kolbenspeichers 36 das Öl unter Druck über die Leitung 33 dem Nockenwellenversteller 8 und der Nockenwelle zugeführt worden ist, wird beim Starten des Motors 4 die Ölpumpe 1 eingeschaltet, die das notwendige Öl über die Leitung 15 zur Kurbelwelle 17 fördert. Außerdem wird auch das unter Druck stehende Öl über das Rückschlagventil 9 in die Leitung 33 gefördert. Entsprechend der vorhergehenden Ausführungsform ist der Druck des Öls in der Druckleitung 7 so groß, dass der Kolbenspeicher 36 wieder mit Öl gefüllt wird.

Fig. 9 zeigt das Fördervolumen-Drehzahl-Diagramm für die Ansteuereinrichtungen gemäß den Fig. 4 und 5. Die Kurve 25 kennzeichnet das Fördervolumen der Ölpumpe 1, während die Kurve 24 den Ölbedarf des Motors angibt. Die Kurve 25 verläuft durch den Nullpunkt des Diagramms. Der in Fig. 9 schraffierte Bereich 39 kennzeichnet das Speichervolumen des Zusatzspeichers 31 (Fig. 4) bzw. des Kolbenspeichers 36 (Fig. 5). Dadurch wird der Unterversorgungsbereich 26 im Vergleich zu herkömmlichen Motoren (Fig. 6) erheblich verringert.

Der Kolbenspeicher 36 hat, wie die Fig. 10 und 11 zeigen, ein zylindrisches Gehäuse 40, in dem ein Kolben 41 verschiebbar gelagert ist. Er ist am Umfang mit einer Ringnut 42 versehen, in die ein Stößel 43 des Elektromagneten 37 eingreifen kann. Mit dem in die Ringnut 42 eingreifenden Stößel 43 wird der Kolben 41 in einer Ausgangsstellung verriegelt.

Der Kolben 41 hat einen im Durchmesser verjüngten Ansatz 44, der von einer Schraubendruckfeder 45 umgeben ist. Sie stützt sich mit einem Ende an einem Boden 46 des Gehäuses 40 und mit ihrem anderen Ende an einer radialen Schulterfläche 47 des Kolbens 41 ab. Der Kolben 41 begrenzt auf der vom Ansatz 44 abgewandten Seite einen Speicherraum 48, in dem sich das Öl befindet und in den die Druckleitung 7 (Fig. 5) mündet.

Wird der Elektromagnet 37 eingeschaltet, wird der Stößel 43 zurückgezogen und der Kolben 41 freigegeben. Die Schraubendruckfeder 45 ist so ausgelegt, dass sie den Kolben 41 verschiebt, der das im Speicherraum 48 befindliche Öl in die Leitung 33 (Fig. 5) zum Nockenwellenversteller 8 bzw. zur Nockenwelle verdrängt. Sobald der Fahrzeugmotor 4 eingeschaltet und die Ölpumpe 1 in Betrieb genommen wird, fördert die Ölpumpe 1 aus dem Tank 6 Öl über die Druckleitung 7 in den Speicherraum 48. Der Druck in der Druckleitung 7 ist größer als der entgegenwirkende Druck der Feder 45, so dass der Kolben 41 in die in den Fig. 10 und 11 dargestellte Lage zurückgeschoben wird, in der er vorteilhaft mit dem Ansatz 44 am Gehäuseboden 46 anliegt. Der Elektromagnet 37 wird umgeschaltet, so dass der Stößel 43 in die Ringnut 42 des Kolbens 41 eingreift und ihn in der Ausgangslage sichert.

Die beschriebenen Ansteuereinrichtungen sorgen dafür, dass die Nockenwelle schon vor dem Starten des Fahrzeugmotors in eine definierte Ausgangsstellung zurückgeführt wird, so dass beim anschließenden Starten des Motors der Nockenwellenversteller einwandfrei arbeiten kann. Da der Fahrzeugmotor 4 erst dann eingeschaltet wird, wenn die Ansteuereinrichtungen den Nockenwellenversteller 8 und die Nockenwelle sowie gegebenenfalls auch die Kurbelwelle 17 bereits mit Öl versorgt haben, ist ein problemloser Betrieb gewährleistet. Die Ansteuereinrichtungen können nicht nur für Verbrennungskraftmaschinen, sondern auch für automatisierte Getriebe eingesetzt werden. Aufgrund des beschriebenen schnellen Öldruckaufbaus können die automatisierten Getriebe frühzeitig anfahren.

## Patentansprüche

1. Ansteuereinrichtung für mindestens einen Nockenwellenversteller von Kraftfahrzeugen, die einen Motor (4) aufweisen und mit mindestens einer Pumpe für ein Öl versehen sind,
die das Öl über wenigstens eine Druckleitung dem Nockenwellenversteller zuführt,
**dadurch gekennzeichnet, dass**
die Ansteuereinrichtung vor dem Start des Motors (4) Öl dem Nockenwellenversteller (8) der Art zuführt, dass über ein Rückschlagsventil (9) zunächst das unter Druck stehende Öl zu dem Nockenwellenversteller (8) gelangt bevor ein Druckzuschaltventil (16) öffnet, so dass das Öl über eine Leitung (15) zur Kurbelwelle (17) des Motors (4) gelangt.

2. Ansteuereinrichtung nach Anspruch 1,
**dadurch gekennzeichnet, dass** die Pumpe (1) durch einen Elektromotor (5) antreibbar ist, der vorteilhaft über eine Kupplung (2) mit der Pumpe (1) kuppelbar ist.

3. Ansteuereinrichtung nach Anspruch 1 oder 2,
**dadurch gekennzeichnet, dass** die Pumpe (1, 1') durch den Motor (4) antreibbar ist.

4. Ansteuereinrichtung nach einem der Ansprüche 1 bis 3,
**dadurch gekennzeichnet, dass** die Pumpe (1) über eine Kupplung (3) mit dem Motor (4) kuppelbar ist.

5. Ansteuereinrichtung nach einem der Ansprüche 1 bis 4,
**dadurch gekennzeichnet, dass** zwei Pumpen (1, 1') vorgesehen sind, von denen die eine Pumpe (1) mit dem Elektromotor (5) und die andere Pumpe (1') mit dem Motor (4) kuppelbar ist, und dass vorteilhaft die beiden Pumpen (1, 1') abwechselnd kuppelbar sind.

6. Ansteuereinrichtung nach einem der Ansprüche 1 bis 5,
**dadurch gekennzeichnet, dass** das Öl vor dem Starten des Motors (4) wenigstens einem Zusatzspeicher (31, 36) entnehmbar ist.

7. Ansteuereinrichtung nach Anspruch 6,
**dadurch gekennzeichnet, dass** dem Zusatzspeicher (31) ein Schaltventil (35) vorgeschaltet ist.

8. Ansteuereinrichtung nach Anspruch 7,
**dadurch gekennzeichnet, dass** das Schaltventil (35) an eine Zündung des Fahrzeuges angeschlossen ist und vorteilhaft in der Zündstellung der Zündung geöffnet wird.

9. Ansteuereinrichtung nach einem der Ansprüche 6 bis 8,
**dadurch gekennzeichnet, dass** der Zusatzspeicher (31, 36) vorgespannt ist.

10. Ansteuereinrichtung nach einem der Ansprüche 6 bis 9,
**dadurch gekennzeichnet, dass** der Zusatzspeicher (36) ein Kolbenspeicher ist, der vorteilhaft in einer Ausgangsstellung verriegelbar ist.

11. Ansteuereinrichtung nach Anspruch 10,
**dadurch gekennzeichnet, dass** ein Kolben (41) des Kolbenspeichers (36) eine Ringnut (42) aufweist, in die ein, vorteilhaft als Stößel eines Elektromagneten (37), ausgebildetes Sperrelement (43) eingreift.

12. Ansteuereinrichtung nach Anspruch 11,
**dadurch gekennzeichnet, dass** der Kolben (41) durch wenigstens eine Druckfeder (45) vorgespannt ist.

13. Ansteuereinrichtung nach einem der Ansprüche 10 bis 12,
**dadurch gekennzeichnet, dass** ein Speicherraum (48) des Kolbenspeichers (36) über wenigstens eine Druckleitung (7) mit der Pumpe (1) verbunden ist.

14. Ansteuereinrichtung nach einem der Ansprüche 11 bis 13,
**dadurch gekennzeichnet, dass** der Elektromagnet (37) an die Zündung des Fahrzeuges angeschlossen ist und vorteilhaft in der Zündstellung der Zündung betätigt wird.

## Claims

1. Trigger device for at least one camshaft adjuster of motor vehicles, which comprises a motor (4) and is provided with at least one pump for an oil,
which feeds the oil to the camshaft adjuster via at least one pressure line,
**characterised in that**
the trigger device feeds oil to the camshaft adjuster (8) before the motor (4) is started such that the pressurised oil firstly reaches the camshaft adjuster (8) via a check valve (9) before a pressure connection valve (16) opens, so that the oil reaches the crankshaft (17) of the motor (4) via a line (15).

2. Trigger device according to Claim 1,
**characterised in that** the pump (1) can be driven by an electric motor (5) which can advantageously be coupled to the pump (1) via a coupling (2).

3. Trigger device according to Claim 1 or 2,
**characterised in that** the pump (1, 1') can be driven by the motor (4).

4. Trigger device according to any one of Claims 1 to 3,
**characterised in that** the pump (1) can be coupled to the motor (4) via a coupling (3).

5. Trigger device according to any one of Claims 1 to 4,
**characterised in that** two pumps (1, 1') are provided, one pump (1) of which can be coupled to the electric motor (5) and the other pump (1') of which can be coupled to the motor (4), and that the two pumps (1, 1') can advantageously be alternately coupled.

6. Trigger device according to any one of Claims 1 to 5,
**characterised in that** the oil can be removed from at least one auxiliary accumulator (31, 36) before the motor (4) is started.

7. Trigger device according to Claim 6,
**characterised in that** a switching valve (35) is connected upstream of the auxiliary accumulator (31).

8. Trigger device according to Claim 7,
**characterised in that** the switching valve (35) is connected to an ignition of the vehicle and is advantageously opened when the ignition is in the ignition position.

9. Trigger device according to any one of Claims 6 to 8,
**characterised in that** the auxiliary accumulator (31, 36) is preloaded.

10. Trigger device according to any one of Claims 6 to 9,
**characterised in that** the auxiliary accumulator (36) is a piston accumulator which can advantageously be locked in an initial position.

11. Trigger device according to Claim 10,
**characterised in that** a piston (41) of the piston accumulator (36) comprises a ring groove (42) in which a blocking element (43), which is advantageously formed as a plunger of an electromagnet (37), engages.

12. Trigger device according to Claim 11,
**characterised in that** the piston (41) is preloaded by at least one compression spring (45).

13. Trigger device according to any one of Claims 10 to 12,
**characterised in that** an accumulator chamber (48) of the piston accumulator (36) is connected to the pump (1) via at least one pressure line (7).

14. Trigger device according to any one of Claims 11 to 13,
**characterised in that** the electromagnet (37) is connected to the ignition of the vehicle and is advantageously actuated when the ignition is in the ignition position.

## Revendications

1. Dispositif de démarrage pour au moins un déphaseur d'arbre à cames de véhicules automobiles qui présentent un moteur (4) et qui sont munis d'au moins une pompe pour une huile, ladite pompe alimentant le déphaseur d'arbre à cames en huile par l'intermédiaire d'au moins une conduite de compression,
**caractérisé en ce que**
le dispositif de démarrage alimente le déphaseur d'arbre à cames (8) en huile avant le démarrage du moteur (4) de telle manière que l'huile sous pression accède en premier lieu au déphaseur d'arbre à cames (8) par l'intermédiaire d'un clapet anti-retour (9) avant qu'une soupape de mise en circuit de pression (16) s'ouvre, de manière à ce que l'huile accède à l'arbre à vilebrequin (17) du moteur (4) par l'intermédiaire d'une conduite (15).

2. Dispositif de démarrage selon la revendication 1,
**caractérisé en ce que** la pompe (1) peut être actionnée par un moteur électrique (5) qui peut être couplé de manière avantageuse à la pompe (1) par l'intermédiaire d'un accouplement (2).

3. Dispositif de démarrage selon la revendication 1 ou 2,
**caractérisé en ce que** la pompe (1, 1') peut être actionnée par le moteur (4).

4. Dispositif de démarrage selon l'une quelconque des revendications 1 à 3,
**caractérisé en ce que** la pompe (1) peut être couplée au moteur (4) par l'intermédiaire d'un accouplement (3).

5. Dispositif de démarrage selon l'une quelconque des revendications 1 à 4,
**caractérisé en ce que** deux pompes (1, 1') sont prévues, dont la première pompe (1) peut être couplée au moteur électrique (5) et dont l'autre pompe (1') peut être couplée au moteur (4) et **en ce que** les deux pompes (1, 1') peuvent être couplées alternativement de manière avantageuse.

6. Dispositif de démarrage selon l'une quelconque des revendications 1 à 5,
**caractérisé en ce que** l'huile peut être prélevée à partir d'au moins un accumulateur additionnel (31, 36) avant le démarrage du moteur (4).

7. Dispositif de démarrage selon la revendication 6,
**caractérisé en ce qu'**une soupape de commande (35) est placée en amont de l'accumulateur additionnel (31).

8. Dispositif de démarrage selon la revendication 7,
**caractérisé en ce que** la soupape de commande (35) est raccordée à un allumage du véhicule et est ouverte de manière avantageuse dans la position d'amorçage de l'allumage.

9. Dispositif de démarrage selon l'une quelconque des revendications 6 à 8,
**caractérisé en ce que** l'accumulateur additionnel (31, 36) est précontraint.

10. Dispositif de démarrage selon l'une quelconque des revendications 6 à 9,
**caractérisé en ce que** l'accumulateur additionnel (36) est un accumulateur à piston qui peut être verrouillé de manière avantageuse dans une position initiale.

11. Dispositif de démarrage selon la revendication 10,
**caractérisé en ce qu'**un piston (41) de l'accumulateur à piston (36) présente une rainure annulaire (42) dans laquelle s'engage un élément de blocage (43) réalisé de manière avantageuse sous forme de poussoir d'un électroaimant (37).

12. Dispositif de démarrage selon la revendication 11,
**caractérisé en ce que** le piston (41) est précontraint par au moins un ressort de compression (45).

13. Dispositif de démarrage selon l'une quelconque des revendications 10 à 12,
**caractérisé en ce qu'**une chambre d'accumulation (48) de l'accumulateur à piston (36) est reliée à la pompe (1) par l'intermédiaire d'au moins une conduite de compression (7).

14. Dispositif de démarrage selon l'une quelconque des revendications 11 à 13,
**caractérisé en ce que** l'électroaimant (37) est raccordé à l'allumage du véhicule et est actionné de manière avantageuse dans la position d'amorçage de l'allumage.
